# EUROPEAN PATENT SPECIFICATION

(11) **EP 2 409 557 B1**
(45) Date of publication and mention of the grant of the patent: **27.06.2018**
(21) Application number: 10753448.9
(22) Date of filing: 11.03.2010
(51) Int. Cl.: A01B 33/02

(54) **WALKING TYPE MANAGEMENT MACHINE**
GEHENDE VERWALTUNGSMASCHINE
MACHINE À CONDUITE DE TYPE MARCHE

(30) Priority: 18.03.2009 JP 2009066931
(43) Date of publication of application: 25.01.2012
(73) Proprietor: Yanmar Co., Ltd., Osaka-shi, Osaka 530-0013 (JP)
(72) Inventor: NAKANO, Masanori, Osaka-shi, Osaka 530-0013 (JP); NISHIMURA, Shuji, Osaka-shi, Osaka 530-0013 (JP); MATSUZAWA, Takeharu, Osaka-shi, Osaka 530-0013 (JP); NAKAMURA, Tadayoshi, Osaka-shi, Osaka 530-0013 (JP)
(74) Representative: Jostarndt Patentanwalts-AG
(86) International application number: PCT/JP2010/054078
(87) International publication number: WO 2010/106956

(56) References cited:
- JP-A- 8 317 703
- JP-A- 2004 242 597
- JP-A- 2006 246 775
- JP-A- 2006 246 775
- JP-A- 2008 212 073
- JP-U- 59 055 425
- JP-U- 59 055 425
- LU-A- 35 001

## Description

### Technical Field

The present invention relates to a walking type agricultural management machine. In more detail, the present invention relates to a tail wheel body for travel of a walking type management machine.

### Background Art

Conventionally, in a walking type agricultural management machine having a tillage device, when a tail wheel body for travel is used, the tail wheel body is attached to a working machine attachment part provided in the rear portion of the tillage device, or the tail wheel body is attached to a tillage depth control bar or a resistance bar (for example, see the Patent Literature 1).

In Patent Literature 2, a walking type management machine is disclosed in which a tillage device is provided behind a traveling part and a tail wheel body is attached to the rear portion of the tillage device wherein the tail wheel body comprises: an auxiliary frame projected rearward from the tillage device; a first supporting rod attached to rotate longitudinally with respect to the auxiliary frame; a second supporting rod attached about a horizontal axis perpendicular to the first supporting rod; a tail wheel attached rotatably to the second supporting rod; a first holding means holding the first supporting rod at an optional rotational position to the auxiliary frame; and a second holding means holding the second supporting rod at an optional rotational position to the first supporting rod.

However, in the former method in which the tail wheel body is attached to the working machine attachment part, the tail wheel body must be attached to and detached from the working machine attachment part whenever traveling work and tillage work of the machine are switched, thereby requiring much labor. There is a problem in that when the tail wheel body is detached from the working machine attachment part, a storage area for the tail wheel body must be secured and managed. Furthermore, there is a problem in that another working machine cannot be used simultaneously when the tail wheel body has been attached to the working machine attachment part.

On the other hand, in the latter method as shown in the Patent Literature 1, another working machine can be used simultaneously, any storage area for the tail wheel body is not required, and the switching of traveling work and tillage work of the machine is easier than the former method. However, it is disadvantageous because the tail wheel body must be detached from one of the bars and then attached to the other bar and height of a tillage depth control stay, and mud adhering to the tillage depth control bar and the resistance bar must be removed at the time of attaching the tail wheel body, thereby requiring much labor.

Patent Literature 1: the Japanese Patent Laid Open Gazette 2006-6343
Patent Literature 2: Japanese Patent Application JP 2006 246775 A

### Disclosure of Invention

### Problems to Be Solved by the Invention

The present invention is provided in consideration of the above problems, and the purpose of the present invention is to provide a walking type agricultural management machine in which the traveling state and tillage state can be switched quickly without any trouble by operating a tail wheel body easily.

### Means for Solving the Problems

The above-mentioned problems are solved by a machine with the features of claim 1.

According to the present invention, in a walking type management machine in which a tillage device is provided behind a traveling part and a tail wheel body is attached to the rear portion of the tillage device, the tail wheel body includes an auxiliary frame projected rearward from the tillage device, a first supporting rod attached rotatably laterally to the auxiliary frame, a second supporting rod attached rotatably longitudinally to the first supporting rod, a tail wheel attached rotatably to the second supporting rod, a first holding means holding the first supporting rod at an optional rotational position to the auxiliary frame, and a second holding means holding the second supporting rod at an optional rotational position to the first supporting rod.

According to the present invention, the first holding means includes a rotation regulation member as an engaging member provided in the auxiliary frame, a cylindrical first boss body fixed to the first supporting rod and slidably engaged with the auxiliary frame, and having a plurality of engagement recesses as an engaged part which can be engaged with the rotation regulation member at one of sides in the axial direction of the auxiliary frame, and a first biasing member biasing the first boss body so as to engage the engagement recesses with the rotation regulation member.

According to the present invention, the second holding means includes a cylindrical second boss body fixed to the first supporting rod and slidably engaged with the second supporting rod, and having a cam part at one of sides in the axial direction of the second supporting rod, a cylindrical cam body engaged with and fixed to the outer side of the second supporting rod, and having a cam part which can be engaged with the cam part at the other side in the axial direction of the second supporting rod, and a second biasing member biasing the cam body so as to engage the cam part of the cam body with the cam part of the second boss body.

According to an embodiment of the present invention, a rubber curtain covering the rear side of the tillage device is provided between the tillage device and the tail wheel body, and, in the tail wheel body, the first supporting rod is held at a rotational position extended vertically so as to be enabled to touch the lateral center of the rubber curtain, and the second supporting rod at the rotational position at which the tail wheel is arranged above the lowest position of the tillage device so as to be enabled to touch the rubber curtain.

### Effect of the Invention

The present invention constructed as the above brings the following effects.

According to the present invention, the first supporting rod can be rotated and held at another rotational position with the first holding means, and the second supporting rod can be rotated and held at another rotational position with the second holding means. Therefore, the vertical position of the tail wheel against the tillage device can be changed by easy rotational operation of the first supporting rod and the second supporting rod, whereby the traveling state and the tillage work state of the walking type management machine can be switched quickly without any trouble.

According to the present invention, by engaging the rotation regulation member with the engagement recess of the first boss body, the first supporting rod can be held at the predetermined rotational position to the auxiliary frame, and by sliding the first boss body so as to release the engaging state between the rotation regulation member and the engagement recess of the first boss body, the first supporting rod can be rotated. Therefore, the held state of the first supporting rod can be changed easily so as to rotate the first supporting rod to another rotational position quickly.

According to the present invention, by engaging the cam part of the cam body with the cam part of the cylindrical second boss body, the second supporting rod can be held at the predetermined rotational position to the first supporting rod, and by moving the second supporting rod about the first supporting rod so as to release the engaging state between the cam part of the cam body and the cam part of the cylindrical second boss body, the second supporting rod can be rotated. Therefore, the held state of the second supporting rod can be changed easily so as to rotate the second supporting rod to another rotational position quickly.

According to the present invention, the left and right sides of the rubber curtain push leftward and rightward the soil after tilled, whereby a ridge is formed in the field. Therefore, the walking type management machine can be switched among the traveling state, the tillage work state and the ridging state quickly without any trouble.

### Brief Description of Drawings

[Fig. 1] It is a left side view of entire construction of a walking type management machine.
[Fig. 2] It is a left side view of a tail wheel body.
[Fig. 3] It is a rear view of the tail wheel body.
[Fig. 4] (a) is an exploded left side view of a first holding means, and (b) is a perspective view of an auxiliary frame and a first boss body.
[Fig. 5] (a) is an exploded left side view of a second holding means, and (b) is a perspective view of a second boss body and a cam body.
[Fig. 6] It is a drawing of a mode in which a second supporting rod is rotated from an actuation position to a non-actuation position. (a) is a left side view and (b) is a rear view.
[Fig. 7] It is a drawing of a mode in which a first supporting rod is rotated from a non-actuation position to an actuation position. (a) is a left side view and (b) is a rear view.
[Fig. 8] It is a drawing of state of ridging work. (a) is a left side view and (b) is a rear view.

### The Best Mode for Carrying out the Invention

Next, explanation will be given on a mode for carrying out the present invention.

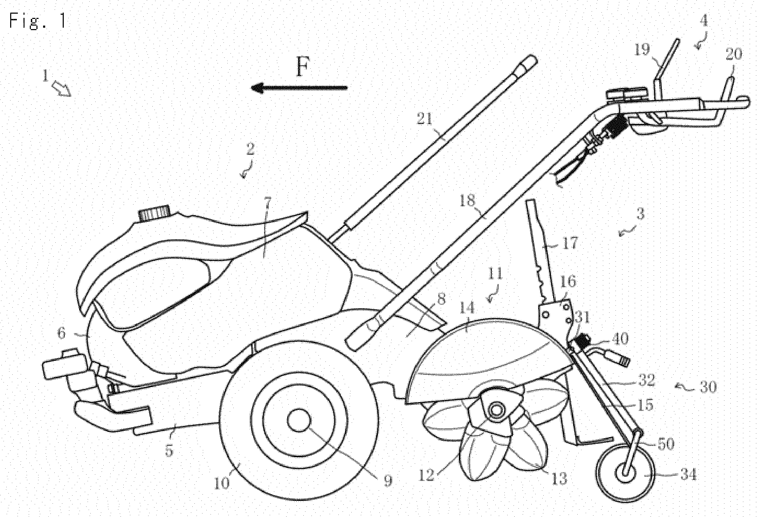

Firstly, explanation will be given on construction of a walking type management machine 1 according to an embodiment of the present invention. In the below explanation, direction of an arrow F in Fig. 1 is defined as front direction of the walking type management machine 1.

As shown in Fig. 1, the walking type management machine 1 includes a traveling part 2, a tillage part 3, and an operation part 4. The tillage part 3 is arranged behind the traveling part 2, and the operation part 4 is arranged behind and above the traveling part 2 and above the tillage part 3.

In the traveling part 2, an engine 6 is provided on a body frame 5, and a speed change device 8 is provided in the rear portion of the body frame 5. A power transmission device 7 is provided between the engine 6 and the speed change device 8.

The speed change device 8 is extended longitudinally, and the front portion thereof is arranged in the rear portion of the body frame 5 and the rear portion thereof is arranged in the lower portion of the tillage part 3. An axle 9 is pivoted in the lower front portion of the speed change device 8, and two traveling wheels 10 are attached to the left and right ends of the axle 9.

The tillage part 3 includes a tillage device 11 for tillage work, and the tillage device 11 is provided in the rear portion of the speed change device 8. A tillage shaft 12 is pivotally supported by the tillage device 11 so as to be extended laterally, and a plurality of tillage tines 13 are provided radially at suitable intervals on the tillage shaft 12.

A tillage cover 14 is arranged above and at left and right sides of the tillage tines 13 corresponding to the rotational locus of the tillage tines 13, and a rubber curtain 15 having lateral width similar to the tillage cover 14 is arranged behind the tillage tines 13. Accordingly, the plurality of the tillage tines 13 are covered their upper side and upper left and right sides by the tillage cover 14 and rear side by the rubber curtain 15.

A working machine attachment part 16 is provided in the rear portion of the tillage cover 14. The working machine attachment part 16 makes a working machine such as a ridger attachable and detachable. In this embodiment, a tillage depth control lever 17 is movably attached to the working machine attachment part 16. By inserting a pin into the tillage depth control lever 17 and the working machine attachment part 16, the tillage depth control lever 17 is fixed at a suitable vertical position. A tail wheel body 30 is arranged behind and below the working machine attachment part 16.

In the operation part 4, a handle 18 is provided aslant rearward upward on the rear slanted portion of the speed change device 8. A deadman's lever 19, a differential lock lever 20 and the like are provided in the rear end of the handle 18. A speed change lever 21 is provided aslant rearward upward on the speed change device 8 and juxtaposed with the handle 18.

The power is transmitted from the engine 6 through the power transmission device 7 to the speed change device 8, and the power changed in speed by the speed change device 8 is transmitted to the traveling wheels 10 and the tillage shaft 12 of the tillage device 11, whereby the traveling wheels 10 and the plurality of the tillage tines 13 can be rotated. The devices of the traveling part 2 and the tillage part 3 can be operated with the levers of the operation part 4.

Accordingly, the walking type management machine 1 can perform tillage work with the tillage device 11 while traveling with the traveling wheels 10, and the tillage depth of the tillage device 11 can be changed by controlling the vertical position of the tillage depth control lever 17.

Next, explanation will be given on an embodiment of the tail wheel body 30. The below explanation is about the traveling mode of the vehicle with a tail wheel 34.

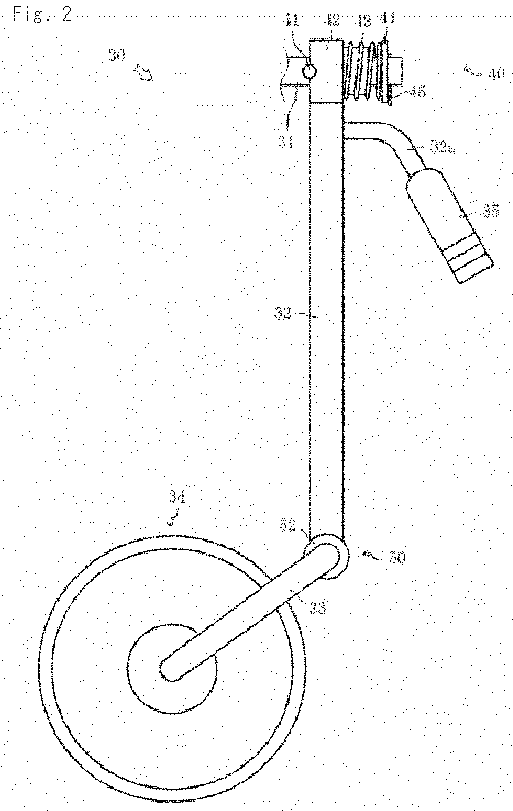

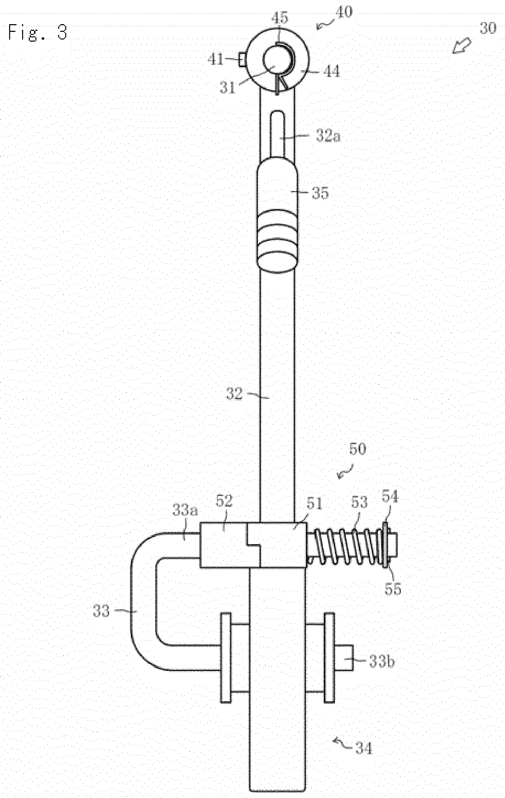

As shown in Figs. 1 to 3, the tail wheel body 30 includes an auxiliary frame 31 projected rearward from the side of the tillage device 11 (the tillage cover 14 or the working machine attachment part 16), a first supporting rod 32 rotatably laterally attached to the auxiliary frame 31 and extended downward from auxiliary frame 31, a second supporting rod 33 rotatably longitudinally attached to the first supporting rod 32, the tail wheel 34 rotatably attached to the second supporting rod 33, a first holding means 40 holds the first supporting rod 32 at an optional rotational position to the auxiliary frame 31, and a second holding means 50 which holds the second supporting rod 33 at an optional rotational position to the first supporting rod 32.

As shown in Figs. 1 to 4, the auxiliary frame 31 is formed cylindrically. The auxiliary frame 31 is fixed its front end to the rear surface of lower portion of the working machine attachment part 16 attached to the rear portion of the tillage cover 14 in this embodiment, and is projected aslant rearward upward from the working machine attachment part 16. A pinhole to which a pin constituting a rotation regulation member 41 of the first holding means 40 is inserted is bored in the auxiliary frame 31. A through hole 31a to which a split pin 45 of the first holding means 40 is inserted is bored in the auxiliary frame 31 along the direction perpendicular to the axis of the auxiliary frame 31.

The first supporting rod 32 is a rod-like member and the basal end, that is, the upper end thereof is fixed to a first boss body 42 constituting the first holding means 40. The first supporting rod 32 is pivotally supported rotatably laterally on the auxiliary frame 31 by the first boss body 42, and is extended along the direction perpendicular to the axis of the auxiliary frame 31. A grasped part 32a substantially L-like shaped when viewed in side is extended rearward from the rear surface of one of ends of the first supporting rod 32 (the upper portion at the side of the first holding means 40), and a grip 35 is provided at the tip of the grasped part 32a.

The first holding means 40 mainly includes the rotation regulation member 41, the first boss body 42, a first biasing member 43, a washer 44 and the split pin 45.

The rotation regulation member 41 as an engaging member is constructed by a cylindrical pin and is inserted into the pinhole bored at the center in the lengthwise direction of the auxiliary frame 31 and projected from the pinhole along the direction perpendicular to the axis of the auxiliary frame 31.

The first boss body 42 is a stepped cylindrical member whose axis is along the longitudinal direction and is engaged with the outer side of the auxiliary frame 31 behind the rotation regulation member 41, and the lower surface of front portion of the first boss body 42 is fixed to the upper end of the first supporting rod 32 by welding or the like. The rear portion of the first boss body 42 is formed as an extended part 42c whose outer diameter is smaller than that of the front portion.

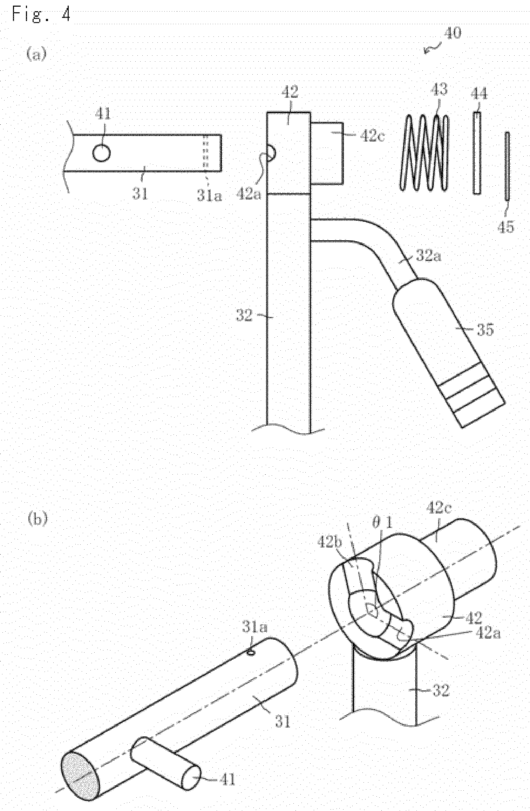

As shown in Fig. 4(b), in the front surface of the first boss body 42, a first engagement recess 42a and a second engagement recess 42b as an engaged part are formed along the radial direction of the first boss body 42 and arranged at a predetermined angle in the rotational direction of the first boss body 42. The shape of inner peripheral surface of each of the first engagement recess 42a and the second engagement recess 42b corresponds to the shape of outer peripheral surface of the rotation regulation member 41, whereby each of the first engagement recess 42a and the second engagement recess 42b can be engaged with the rotation regulation member 41.

When the first engagement recess 42a is arranged at an actuation position, the second engagement recess 42b is arranged at a non-actuation position rotated for an angle θ1 from the actuation position centering on the first boss body 42. The angle θ1 only should hold the first supporting rod 32 at the actuation position at which the axis of the first supporting rod 32 is vertical or at the non-actuation position at which the axis of the first supporting rod 32 is lateral as discussed later, thereby being about 70° to 110°.

In this embodiment, the rotation regulation member 41 is projected to one of the sides of the auxiliary frame 31. However, the first engagement recess 42a and the second engagement recess 42b may alternatively be formed over the total length of the first boss body 42 in the diametral direction so as to project the rotation regulation member 41 to both sides in the diametral direction of the auxiliary frame 31. The angle between the first engagement recess 42a and the second engagement recess 42b only should be θ1, and the insertion angle in the vertical direction and the like of the rotation regulation member 41 is not limited. The shape of each of the first engagement recess 42a and the second engagement recess 42b only should be able to be engaged with the rotation regulation member 41, and is not limited to V-like shape, U-like shape or the like. The first supporting rod 32, in its turn the tail wheel body 30 may alternatively be able to be held at an optional angle. For example, instead of the rotation regulation member 41, the first engagement recess 42a and the second engagement recess 42b, shake proof washers may be provided oppositely on the auxiliary frame 31 and the first boss body 42.

The first biasing member 43 is constructed by a compression spring or the like, and engaged with the outer side of the extended part 42c whose diameter is smaller than that of the first boss body 42.

By combining the above members, the first holding means 40 is constructed. Namely, the first boss body 42 is engaged with the outer side of the auxiliary frame 31 while the first engagement recess 42a of the first boss body 42 faces the rotation regulation member 41 projected on the auxiliary frame 31, and the first biasing member 43 and the washer 44 are engaged in this order with the outer side of the extended part 42c of the first boss body 42. The split pin 45 is inserted into the through hole 31a of the auxiliary frame 31 behind the extended part 42c of the first boss body 42 so as to prevent the first biasing member 43 from falling out from the extended part 42c. As a result, by biasing force of the first biasing member 43, the first boss body 42 is continuously biased so as to be pushed while the first engagement recess 42a of the first boss body 42 is engaged with the rotation regulation member 41. In this state, the first supporting rod 32 is held at the actuation position at which the axis of the first supporting rod 32 is vertical.

Accordingly, when the first supporting rod 32 is at the actuation position, the walking type management machine 1 can travel without damaging the tillage tines 13 or applying resistance on the traveling with the tillage tines 13 by making the tail wheel 34 touch the ground so as to lift up the tillage tines 13. When the tillage work is performed, as discussed later, the tail wheel 34 is rotated upward and then the grip 35 is grasped and pulled rearward, the first boss body 42 is slid rearward along the auxiliary frame 31, whereby the engagement between the rotation regulation member 41 and the first engagement recess 42a is released. Then, the grip 35 is rotated sideward and released at the position at which the second engagement recess 42b faces the rotation regulation member 41, and the second engagement recess 42b is engaged with the rotation regulation member 41, whereby the first supporting rod 32 can be held at the non-actuation position. In this case, not the tail wheel 34 but the lower ends of the tillage tines 13 touch the ground, whereby the walking type management machine 1 can till the field with the tillage tines 13 by rotating the tillage shaft 12.

Next, explanation will be given on the mode in which the second supporting rod 33 is held on the first supporting rod 32 by the second holding means 50.

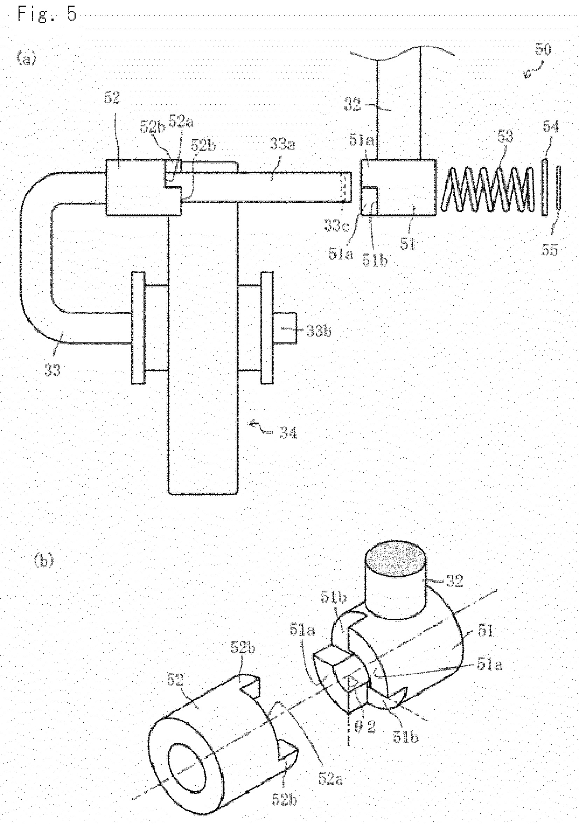

As shown in Fig. 5(a), the second supporting rod 33 is formed by bending a rod-like member having a circular section U-like when viewed in rear. In both ends of the opened side of the second supporting rod 33, an outer side of an end 33a of the side of the basal part (the side of the first supporting rod 32) is engaged with a cam body 52 discussed later, and an outer side of an end 33b of the side of the tip (the side of the tail wheel 34) is engaged with the tail wheel 34 so that the tail wheel 34 is pivotally supported rotatably. In the vicinity of the end surface of the basal side end 33a, a through hole 33c is bored perpendicularly to the axis of the side of the basal end.

The second holding means 50 mainly includes a second boss body 51, the cam body 52, a second biasing member 53, a washer 54 and a split pin 55.

The second boss body 51 is fixed to the lower end of the first supporting rod 32. As shown in Figs. 5(a) and 5(b), the second boss body 51 is formed cylindrically while the axis thereof is lateral, and the upper side of the outer peripheral surface of the second boss body 51 is fixed to the tip, that is, the lower end of the first supporting rod 32 by welding or the like. The inner diameter of the second boss body 51 is larger than the outer diameter of the second supporting rod 33, and the second supporting rod 33 is engaged with the second boss body 51 and pivotally supported rotatably. Uneven cam parts 51a and 51b are formed in the other end surface of the second boss body 51. In this embodiment, the cam part 51a is a convex part projecting toward the cam body 52, and the cam part 51b is a concave part concaved oppositely to the cam body 52. In the rotational peripheral direction of the second boss body 51, the cam parts 51a and 51b are arranged alternately every 90° (θ2).

The cam body 52 is formed cylindrically while the axis thereof is lateral, and is engaged with the outer side of the basal side end 33a of the second supporting rod 33 and fixed thereto by welding or the like. In the end surface of the cam body 52 at the side of the second boss body 51, cam parts 52a and 52b are formed which can be engaged with the cam parts 51a and 51b of the second boss body 51. Namely, the cam parts 52a and 52b are shaped similarly to the cam parts 51a and 51b. The second boss body 51 may alternatively be the same member as the cam body 52, whereby the parts can be made common so as to reduce the cost.

Then, the basal side end 33a of the second supporting rod 33 is inserted into the second boss body 51, and the cam body 52 is arranged at the position at which the cam part 52a faces the cam part 51b of the second boss body 51 and the cam part 52b faces the cam part 51a of the second boss body 51. The second biasing member 53 and the washer 54 are engaged in this order with the outer side of the basal side end 33a of the second supporting rod 33, and then the split pin 55 is inserted into the through hole 33c in the vicinity of the end surface of the basal side end 33a. As a result, the second supporting rod 33 is biased rightward about the second boss body 51 by the second biasing member 53, and the cam parts 52a and 52b of the cam body 52 are engaged with the predetermined cam parts 51a and 51b of the second boss body 51 while the cam body 52 on the second supporting rod 33 is pushed toward the second boss body 51. Accordingly, the second holding means 50 is constructed.

Therefore, the second supporting rod 33 can be held at the actuation position without being rotated against the first supporting rod 32. The second supporting rod 33 held at this actuation position is arranged before and below the first supporting rod 32. The first holding means 40 and the second holding means 50 may alternatively be constructed by one of the engaging means as mentioned above. Namely, the first holding means 40 and the second holding means 50 may alternatively be constructed by the engaging means including the rotation regulation member and the engagement concave part or the engaging means including the cam part and the cam part.

In this construction, when the first supporting rod 32 is held at the actuation position and the second supporting rod 33 is held at the actuation position, the tip side end 33b of the second supporting rod 33 is arranged lower in the tail wheel body 30, and the tail wheel 34 is arranged lower than the tillage device 11 (the tillage tines 13). Accordingly, the walking type management machine 1 can travel with the tail wheel 34.

Next, explanation will be given on the processes for switching the walking type management machine 1 from the traveling state to the tillage work state by operating the tail wheel body 30.

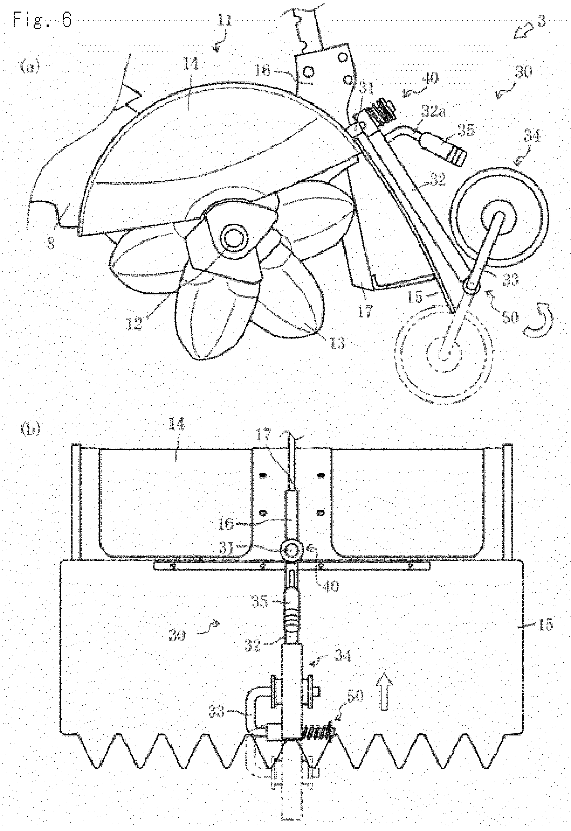

Firstly, as shown in Figs. 6(a) and 6(b), the second supporting rod 33 is changed from the actuation position to the non-actuation position. Namely, the second supporting rod 33 is grasped and pulled oppositely to the biasing direction of the second biasing member 53 (leftward) so that the second supporting rod 33 is slid, whereby the engaging between the cam parts 52a and 52b of the cam body 52 and the cam parts 51a and 51b of the second boss body 51 is released. Then, the second supporting rod 33 is rotated rearward (along an direction of an arrow in Fig. 6) for substantially 180° so that the cam parts 52a and 52b of the second supporting rod 33 are engaged with the cam parts 51a and 51b of the first supporting rod 32 other than the cam parts 51a and 51b mentioned above, whereby the second supporting rod 33 is held at the non-actuation position. In this case, the second supporting rod 33 is held behind the first supporting rod 32.

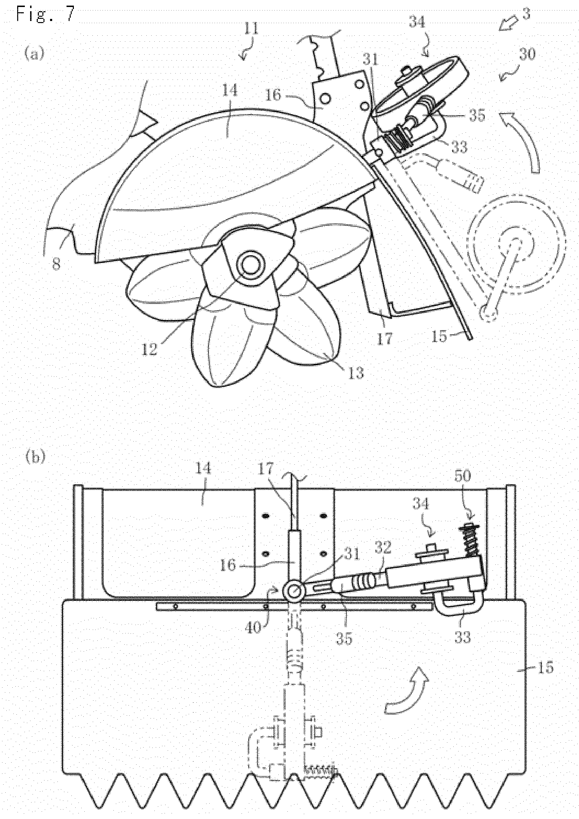

Next, as shown in Figs. 7(a) and 7(b), the first supporting rod 32 is changed from the actuation position to the non-actuation position. Namely, the first supporting rod 32 is pulled oppositely to the biasing direction of the first biasing member 43 (rearward) while grasping the grip 35 of the first supporting rod 32 so that the second supporting rod 33 is slid, whereby the engaging between the rotation regulation member 41 and the first engagement recess 42a is released. Then, the first supporting rod 32 is rotated rightward (along a direction of an arrow in Fig. 7) for the angle θ1 so that the second engagement recess 42b of the first boss body 42 other than the second engagement recess 42b mentioned above is engaged with the rotation regulation member 41, whereby the first supporting rod 32 is held at the non-actuation position. In this case, the first supporting rod 32 is held above and behind the tillage device 11.

When the first supporting rod 32 is held at the non-actuation position and the second supporting rod 33 is held at the non-actuation position as mentioned above, the second supporting rod 33 and the first supporting rod 32 are arranged above and behind the tillage device 11, and the tail wheel 34 pivotally supported on the tip side end 33b of the second supporting rod 33 is arranged upper than the tillage tines 13. Therefore, the walking type management machine 1 can perform the tillage work. By operating the tail wheel body 30 with processes opposite to the processes mentioned above, the walking type management machine 1 can be switched from the tillage work state to the traveling state.

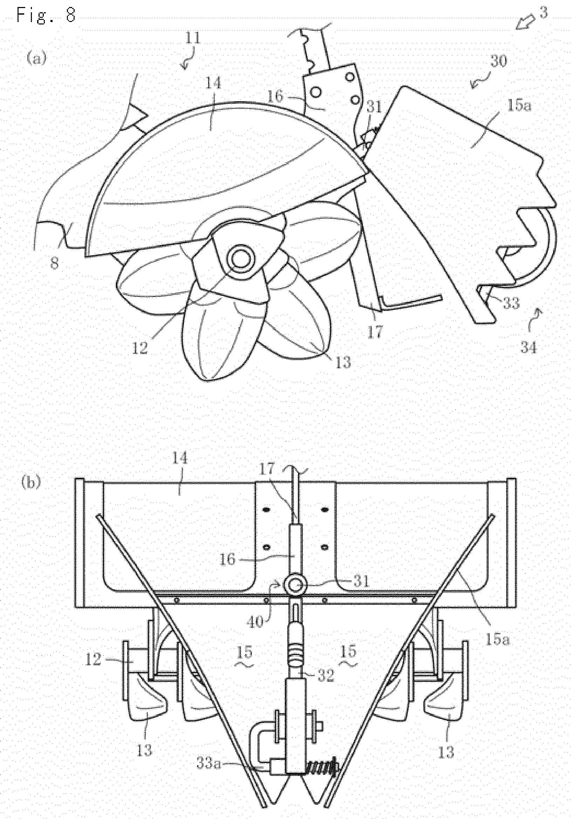

At the halfway of the switching of the walking type management machine 1 between the traveling state and the tillage work state, the first supporting rod 32 is held at the actuation position and the second supporting rod 33 is held at the non-actuation position, whereby ridging work with the walking type management machine 1 can be performed. In detail, as shown in Fig. 8, in the walking type management machine 1, when the tillage shaft 12 is rotated so as to perform the tillage work with the tillage tines 13 in the state that the first supporting rod 32 of the tail wheel body 30 is held at the actuation position rotated downward about the auxiliary frame 31, the rubber curtain 15 arranged before the tail wheel body 30 is pressed down by the first supporting rod 32 and the basal side end 33a of the second supporting rod 33, whereby the left and right sides of the rubber curtain 15 push the soil dug up by the tillage tines 13 leftward and rightward so that a ridge is formed in the field.

As shown in Fig. 8(b), a part of fixing members (at the left and right ends) fixing the rubber curtain 15 to the tillage cover 14 may be removed so as to open the left and right upper portions of the rubber curtain 15 suitably. Accordingly, the soil dug up by the tillage tines 13 is hard to be collected in the tillage cover 14, whereby the ridging work can be performed certainly. Two opened parts 15a of the rubber curtain 15 press the side surfaces of the ridges so as to make the ridges hard to crumble.

The length of the basal side end 33a of the second supporting rod 33 may be controlled so as to control optionally the bottom between the ridges.

As mentioned above, in the walking type management machine 1 in which the tillage device 11 is provided behind the traveling part 2 and the tail wheel body 30 is attached to the rear portion of the tillage device 11, the tail wheel body 30 includes the auxiliary frame 31 projected rearward from the tillage device 11, the first supporting rod 32 attached rotatably laterally to the auxiliary frame 31, the second supporting rod 33 attached rotatably longitudinally to the first supporting rod 32, the tail wheel 34 attached rotatably to the second supporting rod 33, the first holding means 40 holding the first supporting rod 32 at an optional rotational position to the auxiliary frame 31, and the second holding means 50 holding the second supporting rod 33 at an optional rotational position to the first supporting rod 32. Accordingly, the first supporting rod 32 can be rotated and held at another rotational position with the first holding means 40, and the second supporting rod 33 can be rotated and held at another rotational position with the second holding means 50. Therefore, the vertical position of the tail wheel 34 about the tillage device 11 can be changed by easy rotational operation of the first supporting rod 32 and the second supporting rod 33, whereby the traveling state and the tillage work state of the walking type management machine 1 can be switched quickly without any trouble.

The first holding means 40 includes the rotation regulation member 41 as an engaging member provided in the auxiliary frame 31, the cylindrical first boss body 42 fixed to the first supporting rod 32 and slidably engaged with the auxiliary frame 31, and having the plurality of the engagement recesses (the first engagement recess 42a and the second engagement recess 42b) as an engaged part which can be engaged with the rotation regulation member 41 at one of sides in the axial direction of the auxiliary frame 31, and the first biasing member 43 biasing the first boss body 42 so as to engage the engagement recesses with the rotation regulation member 41. Accordingly, by engaging the rotation regulation member 41 with the first engagement recess 42a of the first boss body 42, the first supporting rod 32 can be held at the predetermined rotational position to the auxiliary frame 31, and by sliding the first boss body 42 so as to release the engaging state between the rotation regulation member 41 and the first engagement recess 42a of the first boss body 42, the first supporting rod 32 can be rotated. Therefore, the held state of the first supporting rod 32 can be changed easily so as to rotate the first supporting rod 32 to another rotational position quickly.

The second holding means 50 includes the cylindrical second boss body 51 fixed to the first supporting rod 32 and slidably engaged with the second supporting rod 33, and having the cam parts 51a and 51b at one of sides in the axial direction of the second supporting rod 33, the cylindrical cam body 52 engaged with and fixed to the outer side of the second supporting rod 33, and having the cam parts 52a and 52b which can be engaged with the cam parts 51a and 51b at the other side in the axial direction of the second supporting rod 33, and the second biasing member 53 biasing the cam body 52 so as to engage the cam parts 52a and 52b with the cam parts 51a and 51b of the cylindrical second boss body 51. Accordingly, by engaging the cam parts 52a and 52b of the cam body 52 with the cam parts 51a and 51b of the cylindrical second boss body 51, the second supporting rod 33 can be held at the predetermined rotational position to the first supporting rod 32, and by moving the second supporting rod 33 about the first supporting rod 32 so as to release the engaging state between the cam parts 52a and 52b of the cam body 52 and the cam parts 51a and 51b of the cylindrical second boss body 51, the second supporting rod 33 can be rotated. Therefore, the held state of the second supporting rod 33 can be changed easily so as to rotate the second supporting rod 33 to another rotational position quickly.

The rubber curtain 15 covering the rear side of the tillage device 11 is provided between the tillage device 11 and the tail wheel body 30, and in the tail wheel body 30, the first supporting rod 32 is held at the rotational position extended vertically so as to be enabled to touch the lateral center of the rubber curtain 15, and the second supporting rod 33 at the rotational position at which the tail wheel 34 is arranged above the lowest position of the tillage device 11 so as to be enabled to touch the lateral center of the rubber curtain 15. Accordingly, the left and right sides of the rubber curtain 15 push leftward and rightward the soil after tilled, whereby a ridge is formed in the field. Therefore, the walking type management machine 1 can be switched among the traveling state, the tillage work state and the ridging state quickly without any trouble.

### Industrial Applicability

The present invention can be employed for a walking type management machine.

### Description of Notations

- 1: working management machine
- 11: tillage device
- 15: rubber curtain
- 15a: opened part
- 30: tail wheel body
- 31: auxiliary frame
- 32: first supporting rod
- 32a: grasped part
- 33: second supporting rod
- 34: tail wheel
- 40: first holding means
- 41: rotation regulation member
- 42: first boss body
- 42a: first engagement recess
- 42b: second engagement recess
- 43: first biasing member
- 50: second holding means
- 51: second boss body
- 52: cam body
- 53: second biasing member

## Claims

1. A walking type agricultural management machine (1) in which a tillage device (3), is provided behind a traveling part (2);
an auxiliary frame (31) projected rearward from the tillage device (3);
a first supporting rod (32) attached rotatably laterally to the auxiliary frame (31);
a second supporting rod (33) attached rotatably longitudinally to the first supporting rod (32);
a tail wheel (34) attached rotatably to the second supporting rod (33);
a first holding means (40) holding the first supporting rod (32) at an arbitrary rotational position to the auxiliary frame (31); and
a second holding means (50) holding the second supporting rod (33) at an arbitrary rotational position to the first supporting rod (32) is attached to the rear portion of the tillage device (3),
**characterized in that** the second holding means (50) comprises:
a cylindrical second boss body (51) fixed to the first supporting rod (32), slidably engaged with the second supporting rod (33), and having a cam part (51a, 51b) at one of sides in the axial direction of the second supporting rod (33);
a cylindrical cam body (52) engaged with and fixed to the outer side of the second supporting rod (33), and having a cam part (52a, 52b) which can be engaged with the cam part (51a, 51b) of the cylindrical cam body (51) at the other side in the axial direction of the second supporting rod (33);
a second biasing member (53) biasing the cylindrical cam body (52) so as to engage the cam part (52a, 52b) of the cylindrical second boss body cam body (52) with the cam part (51a, 51b) of the second boss body (51); and
the cam part (51b) being a concave part concaved oppositely to the cam body (52) and the cam part (51a) being a convex part projecting toward the cam body (52), are engaging mutually and are formed in the cylindrical second boss body (51) and the cylindrical cam body (52) for every equal angle to a direction of rotation.

2. The walking type agricultural management machine (1) according to claim 1, wherein a rubber curtain (15) covering the rear side of the tillage device (11) is provided between the tillage device (11) and the tail wheel body (30), and
wherein, in the tail wheel body (30), the first supporting rod (32) is held at a rotational position extended vertically so as to be enabled to touch the lateral center of the rubber curtain (15), and the second supporting rod (33) at the rotational position at which the tail wheel (34) is arranged above the lowest position of the tillage device (11) so as to be enabled to touch the rubber curtain (15).

## Patentansprüche

1. Bewegbare Landbearbeitungsmaschine (1), bei der eine Bodenbearbeitungsvorrichtung (3) hinter einem bewegbaren Teil (2) vorgesehen ist;
einen Hilfsrahmen (31), der sich von der Bodenbearbeitungsvorrichtung (3) nach hinten erstreckt;
eine erste Haltestange (32), die seitlich drehbar an dem Hilfsrahmen (31) angebracht ist;
eine zweite Haltestange (33), die längs drehbar an der ersten Haltestange (32) angebracht ist;
ein Spornrad (34), das drehbar an der zweiten Haltestange (33) angebracht ist;
eine erste Halteeinrichtung (40), die die erste Haltestange (32) an einer beliebigen Drehposition an dem Hilfsrahmen (31) hält; und
eine zweite Halteeinrichtung (50), die die zweite Haltestange (33) an einer beliebigen Drehposition an der ersten Haltestange (32) hält, an dem hinteren Teil der Bodenbearbeitungsvorrichtung (3) vorgesehen ist, **dadurch gekennzeichnet, dass**
die zweite Halteeinrichtung (50) aufweist:
einen zylindrischen zweiten Nabenkörper (51), der an der ersten Haltestange (32) befestigt ist, gleitend mit der zweiten Haltestange (33) in Wirkverbindung, und mit einem Nockenteil (51a, 51b) auf einer der Seiten in der Axialrichtung der zweiten Haltestange (33);
einen zylindrischen Nockenkörper (52), der mit der Außenseite der zweiten Haltestange (33) in Wirkverbindung steht und daran befestigt ist, und mit einem Nockenteil (52a, 52b), das mit dem Nockenteil (51a, 51b) des zylindrischen Nockenkörpers (51) auf der anderen Seite in der Axialrichtung der zweiten Haltestange (33) in Wirkverbindung gebracht werden kann;
ein zweites Vorspannelement (53), das den zylindrischen Nockenkörper (52) vorspannt, so dass er das Nockenteil (52a, 52b) des zylindrischen zweiten Nabenkörper-Nockenkörpers (52) mit dem Nockenteil (51a, 51b) des zweiten Nabenkörpers (51) in Wirkverbindung bringt; und
das Nockenteil (51b), das ein konkaves Teil ist, das gegenüber dem Nockenkörper (52) konkav ist, und das Nockenteil (51a), das ein konvexes Teil ist, das hin zu dem Nockenkörper (52) vorsteht, miteinander in Wirkverbindung stehen und in dem zylindrischen zweiten Nabenkörper (51) und dem zylindrischen Nockenkörper (52) für jeden gleichen Winkel zu einer Drehrichtung gebildet sind.

2. Bewegbare Landbearbeitungsmaschine (1) nach Anspruch 1, wobei ein Gummivorhang (15), der die Hinterseite der Bodenbearbeitungsvorrichtung (11) bedeckt, zwischen den Bodenbearbeitungsvorrichtung (11) und dem Spornradkörper (30) bereitgestellt ist, und wobei bei dem Spornradkörper (30) die erste Haltestange (32) an einer vertikal erstreckten Drehposition gehalten wird, um in der Lage zu sein, das seitliche Zentrum des Gummivorhangs (15) zu berühren, und die zweite Haltestange (33) an der Drehposition gehalten wird, an der das Spornrad (34) über der niedrigsten Position der Bodenbearbeitungsvorrichtung (11) angeordnet ist, um in der Lage zu sein, den Gummivorhang (15) zu berühren.

## Revendications

1. Machine agricole accompagnante (1), dans laquelle un dispositif de travail du sol (3) est prévu derrière une partie mobile (2)
un châssis auxiliaire (31) étant projeté vers l'arrière à partir du dispositif de travail du sol (3) ;
une première tige de support (32) attachée d'une manière permettant la rotation latéralement sur le châssis auxiliaire (31) ;
une seconde tige de support (33) attachée d'une manière permettant la rotation longitudinalement sur la première tige de support (32) ;
une roulette de queue (34) attachée d'une manière permettant la rotation sur la seconde tige de support (33) ;
un premier moyen de maintien (40) maintenant la première tige de support (32) sur une position de rotation arbitraire sur le châssis auxiliaire (31), et
un second moyen de maintien (50) maintenant la seconde tige de supportant (33) sur une position de rotation arbitraire sur la première tige de support (32) est attaché sur la portion arrière du dispositif de travail du sol (3), **caractérisé en ce que**
le second moyen de maintien (50) comprend :
un second corps de bossage cylindrique (51) fixé sur la première tige de support (32), en prise d'une manière permettant le coulissement avec la seconde tige de support (33), et présentant une partie de came (51a, 51b) sur un des côtés dans la direction axiale de la seconde tige de support (33) ;
un corps de came cylindrique (52) en prise avec le côté extérieur de la seconde tige de support (33), et fixé sur celui-ci, et présentant une partie de came (52a, 52b) qui peut être en prise avec la partie de came (51a, 51b) du corps de came cylindrique (51) sur l'autre côté dans la direction axiale de la seconde tige de support (33) ;
un second élément de sollicitation (53) sollicitant le corps de came cylindrique (52) de manière à venir en prise avec la partie de came (52a, 52b) du corps de came de second corps de bossage cylindrique (52) avec la partie de came (51a, 51b) du second corps de bossage (51), et
la partie de came (51b), laquelle est une partie de forme concave opposée au corps de came (52), et la partie de came (51a), laquelle est une partie convexe faisant saillie vers le corps de came (52), viennent en prise mutuellement et sont formées dans le second corps de bossage cylindrique (51) et le corps de came cylindrique (52) pour chaque angle égal par rapport à une direction de rotation.

2. Machine agricole accompagnante (1) selon la revendication 1, dans laquelle un rideau en caoutchouc (15) couvrant le côté arrière du dispositif de travail du sol (11) est prévu entre le dispositif de travail du sol (11) et le corps de roulette de queue (30), et
dans laquelle, dans le corps de roulette de queue (30), la première tige de support (32) est maintenue sur une position de rotation étendue de manière verticale de manière à lui permettre de toucher le centre latéral du rideau caoutchouc (15), et la seconde tige de support (33) sur la position de rotation, sur laquelle la roulette de queue (34) est agencée au-dessus de la position la plus basse du dispositif de travail du sol (11) de manière à lui permettre de toucher le rideau caoutchouc (15).
